# FASCICULE DE BREVET EUROPEEN

(11) **EP 3 368 749 B1**
(45) Date de publication et mention de la délivrance du brevet: **12.02.2020**
(21) Numéro de dépôt: 16809122.1
(22) Date de dépôt: 27.10.2016
(51) Int. Cl.: F01D 25/28, B23P 21/00, B62D 65/18, B65G 47/61

(54) **PORTIQUE D'ASSEMBLAGE DE MOTEUR**
RAHMENBRÜCKE ZUR ZUSAMMENSTELLUNG EINES TRIEBWERKES
GATE FOR ASSEMBLING AN ENGINE

(30) Priorité: 29.10.2015 FR 1560377
(43) Date de publication de la demande: 05.09.2018
(73) Titulaire: Safran Aircraft Engines, 75015 Paris (FR)
(72) Inventeur: BAUCHER, Stéphane, André, 77550 Moissy-Cramayel (FR); BERTHE, Eric, 77550 Moissy-Cramayel (FR); GUINOT, Clément, Paul, Claude, 77550 Moissy-Cramayel (FR); MARTINS, Manuel, Daniel, 77550 Moissy-Cramayel (FR)
(74) Mandataire: Brevalex
(86) Numéro de dépôt international: PCT/FR2016/052791
(87) Numéro de publication internationale: WO 2017/072449

(56) Documents cités:
- WO-A1-2005/014377
- CN-U- 201 494 922
- GB-A- 702 487
- US-B1- 6 202 566

## Description

Le sujet de l'invention présente est un portique d'assemblage d'un moteur, conçu plus précisément pour des moteurs à forme de révolution de grande dimension, comme des turbomachines d'aéronefs, sans que d'autres applications soient exclues.

De tels moteurs sont composés de plusieurs modules encombrants et pesants et qui doivent être assemblés entre eux. Les modules arrivent au lieu d'assemblage sur des chariots, sont soulevés, et accostés les uns aux autres pour réaliser l'assemblage. Une grande précision de positionnement est nécessaire, ainsi qu'une délicatesse de manipulation à cause de la fragilité de certains constituants des modules. Cela est difficile à accomplir sur des pièces volumineuses et pesantes. Les portiques d'assemblage existants se révèlent quelque peu insuffisants sous cet aspect. Un exemple est décrit dans le document FR 2 952 842 A. Un portique incorporé à une chaîne de montage de véhicules est le sujet de WO 2005/014 377.

Enfin, GB 702 487 A est conforme au préambule de la revendication indépendante, mais il ne définit pas la forme géométriquement du berceau.

Les imprécisions de positionnement découlent de plusieurs causes. Des modules sont tout d'abord soumis à des oscillations, une fois qu'ils sont soulevés. Leur poids déforme ensuite, de façon non négligeable, les portiques quand il les supporte, ce qui rend imprévisibles les positions d'accostage des modules.

D'autres inconvénients des portiques connus concernent des difficultés d'accès aux modules, soit par le bas une fois qu'ils sont montés sur le portique, soit à certains endroits de leur périphérie.

Un but fondamental de l'invention est donc de proposer un portique qui offre la précision et la répétabilité de positionnement nécessaire au bon déroulement des accostages de modules. Un autre but, connexe au précédent, est de placer avec précision les modules déjà montés sur les portiques à différentes positions ou différentes orientations, afin de réaliser les assemblages successifs dans des conditions variées selon la phase d'assemblage et la version de moteur à assembler.

Sous une forme générale, l'invention concerne un portique d'assemblage d'un moteur, le portique comprenant : une poutre horizontale ; deux poteaux; deux moyens de guidage et de montée-baisse reliant chacun une extrémité de la poutre à un des poteaux ; un chariot posé sur la poutre et mobile le long de la poutre ; une balancelle suspendue au chariot ; un moyen de rotation de la balancelle autour d'un axe vertical reliant la balancelle au chariot, la balancelle comprenant un berceau de fixation du moteur.

Cette combinaison de moyens permet d'obtenir dans une large mesure les qualités et avantages évoqués à l'instant. Le module monté sur le berceau peut être orienté et déplacé horizontalement et verticalement. L'utilisation d'une poutre sur laquelle coulissent le support de palans et le chariot mobile support de la balancelle contribue au bon positionnement relatif des modules. Les poteaux et la poutre peuvent être conçus très rigides et donc soumis à peu de déformations, et leur cohésion rend ces déformations prévisibles et reproductibles à charge identique soulevée, ce qu'on peut exploiter comme on le détaillera plus loin. Et le berceau comprend une première partie reliée à l'axe vertical, une seconde partie porteuse de moyens de fixation du moteur, et un moyen de déplacement de la seconde partie le long de la première partie, la seconde partie étant soutenue par la première partie, la première partie et la seconde partie étant en forme d'arceaux. Une grande liberté de position est obtenue, la position angulaire du moteur pouvant aussi être réglée à volonté.

Selon un perfectionnement, le chariot comporte une première partie reliée à la poutre et une seconde partie reliée à l'axe vertical, et des moyens de déplacement de la seconde partie par rapport à la première dans une direction horizontale perpendiculaire à la poutre. Le module monté sur le berceau peut alors être déplacé latéralement, ce qui augmente encore la liberté de positionnement.

Un perfectionnement important est réalisé en ajoutant au dispositif un, avantageusement deux palans de levage posés sur la poutre et mobiles le long de la poutre. Les palans offrent les mêmes possibilités de mouvement à un autre module (ou à un équipement quelconque qui leur sont accrochés), ce qui permet d'approcher les modules l'un de l'autre, tout en les gardant à des positions bien déterminées. Les accostages sont donc facilités. On préconise alors que les palans soient porteurs d'un capteur du poids de la charge qu'ils lèvent, avantageusement un capteur triaxial du poids de la charge levée. La connaissance de ce poids permet en effet d'évaluer la déformation des supports et donc les mouvements qu'il faut instaurer pour obtenir un accostage précis des modules. De plus, le suivi des forces horizontales indique la présence et l'ampleur des efforts d'accostage.

Un autre moyen pour accroître la précision et la fiabilité des accostages de modules à assembler est obtenue si les moyens de déplacement relient les parties mutuellement mobiles du portique comprennent, entre deux parties qu'ils relient, des moyens de guidage à éléments roulants intermédiaires montés sans jeu et précontraints.

La rigidification du portique est accrue en ajoutant des poutres de jonction pour relier les poteaux entre eux, les poutres de jonction comprenant des poutres obliques ayant des directions croisées.

Les accostages peuvent alors avantageusement être accomplis de façon presque automatique par un dispositif numérique associé au portique, qui peut être conçu pour imposer des mouvements nécessaires à l'accostage avec une grande précision, en déplaçant les constituants du portique. Ce dispositif comprend des moyens numériques de correction automatique des déplacements, d'après les poids des charges levées par les palans et soutenues par le berceau. En effet, la connaissance des charges, jointe à une bonne répétabilité des déformations, permet de calculer celles-ci.

La répétabilité des déformations est garantie notamment si les moyens de déplacement des éléments du portique comprennent, entre deux parties qu'ils relient, des moyens de guidage à éléments roulants intermédiaires montés sans jeu et précontraints.

Les différents aspects, caractéristiques et avantages de l'invention, incluant ceux qui ont été indiqués ci-dessus et d'autres, seront maintenant décrits plus en détail au moyen des figures suivantes, qui représentent une réalisation particulière de l'invention, donnée à titre illustratif :
- la figure 1 est une vue générale du portique ;
- la figure 2 illustre le chariot mobile porteur des modules assemblés ;
- la figure 3 est une vue générale de la balancelle ;
- la figure 4 illustre le berceau principal de support des modules ;
- la figure 5 illustre un dispositif de fixation des modules ;
- la figure 6 représente en coupe le mécanisme du berceau principal ;
- la figure 7 est une autre vue de la balancelle ;
- la figure 8 illustre le berceau auxiliaire ;
- la figure 9 illustre un vérin de réglage ;
- la figure 10 illustre le palan principal de levage ;
- la figure 11, le bas dudit palan ;
- la figure 12 illustre le palan auxiliaire ;
- la figure 13 illustre le montage de la poutre horizontale sur le portique ;
- et la figure 14 représente le dispositif de commande du portique.

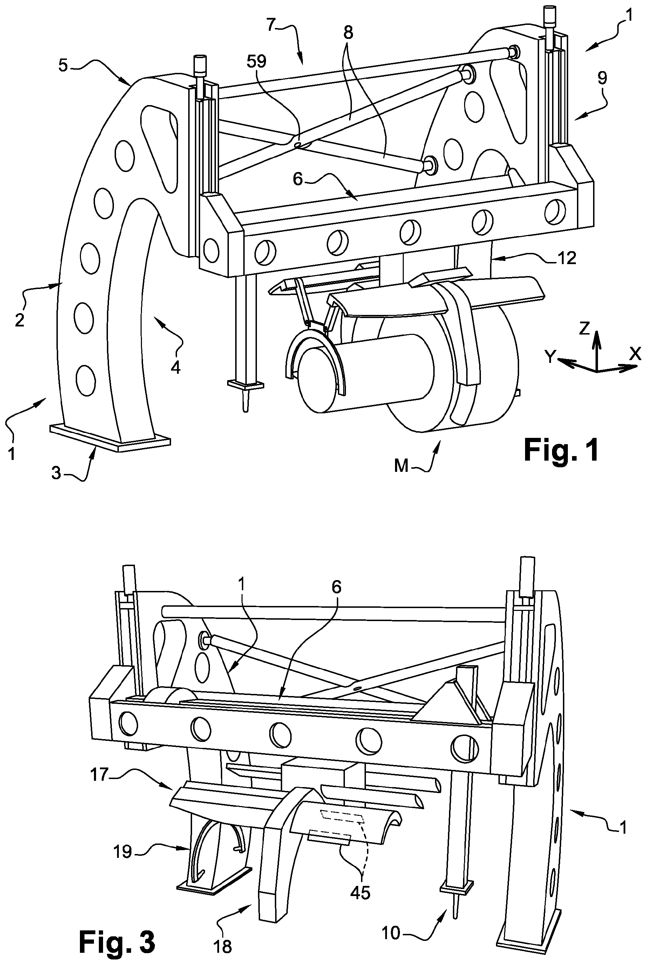

On aborde la figure 1. Le portique comprend deux poteaux 1, semblables, parallèles et essentiellement verticaux, composés chacun d'une partie montante 2 s'élevant d'un pied 3 fixé à un bâti au sol, inclinée en s'éloignant d'une poutre longitudinale 6, destinée à soutenir le moteur M et qu'on décrira ensuite, dans le sens montant, sur au moins une partie de sa hauteur; la partie montante 2 est aussi dotée d'une courbure dont la concavité 4 est dirigée vers un moteur M en cours d'assemblage sur le portique, et d'une partie supérieure 5 courbe en voûte et s'étendant entre la partie montante 2 et une face verticale porteuse des moyens de liaison à la poutre horizontale 6. Cette forme de poteau 1, dite en col de cygne, a un aspect agréable, tout en offrant un porte-à-faux réduit, une bonne rigidité et une faible emprise au sol, qui offre une grande latitude pour travailler autour du moteur et apporter de divers lieux le matériel et les modules à monter. La rigidité du portique est accrue par des barres 7 reliant des poteaux 1 entre eux, et dont certaines, notées 8, se croisent et sont d'ailleurs liées entre elles à un croisement 59, en s'opposant ainsi fortement aux divers modes de flexion (symétriques et antisymétriques) des poteaux 1 dans la direction d'extension de la poutre horizontale 6 (axe X du repère représenté). Les poteaux 1 sont par ailleurs particulièrement rigides à l'égard des flexions dans le plan des deux autres axes Y et Z du repère.

La poutre horizontale 6 est mobile en translation verticale (axe Z), grâce à des dispositifs de montée-baisse 9, qui relient respectivement chacune de ses extrémités à une partie supérieure 5 du poteau 1. Ces dispositifs de montée-baisse 9 seront aussi décrits plus tard.

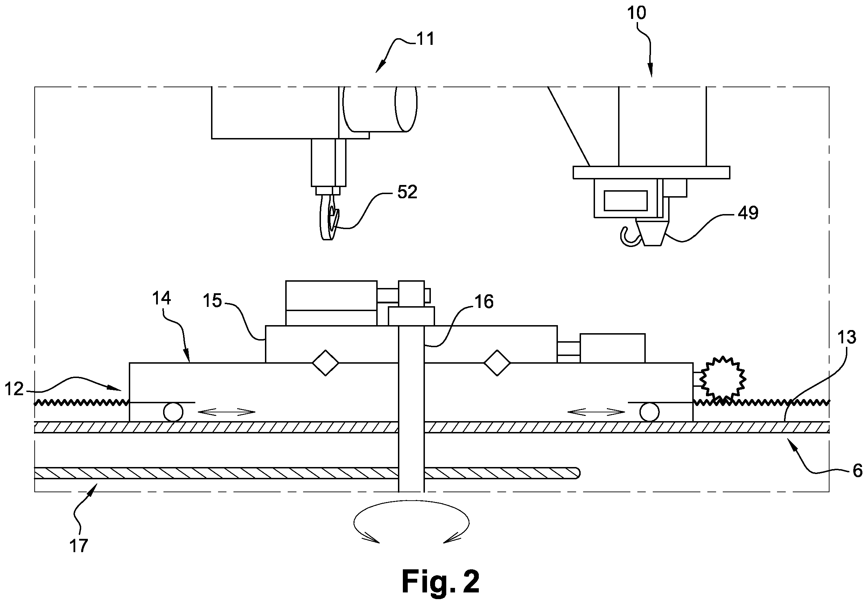

La poutre horizontale 6 porte deux palans 10 et 11, ainsi qu'un chariot 12. Les palans 10 et 11 sont destinés à lever divers équipements indispensables à l'assemblage des moteurs. On s'intéresse d'abord au chariot 12, qui est destiné à soutenir le moteur M monté sur le portique, en recourant aussi aux figures 2 et 3. Le chariot 12 est mobile sur une piste inférieure 13 de la poutre horizontale 6, qui s'étend dans sa direction d'extension principale (X). Il comprend une table inférieure 14 directement posée sur la piste inférieure 13, et une table supérieure 15 posée sur la table inférieure 14 et mobile horizontalement par rapport à elle, dans la direction perpendiculaire (Y). La table supérieure 15 porte un axe vertical 16 de rotation qui se prolonge sous la poutre horizontale 6 et fait tourner une pièce appelée balancelle 17 autour de l'axe vertical Z. La balancelle 17 porte un berceau principal 18 et un berceau auxiliaire 19 auxquels le moteur M est fixé.

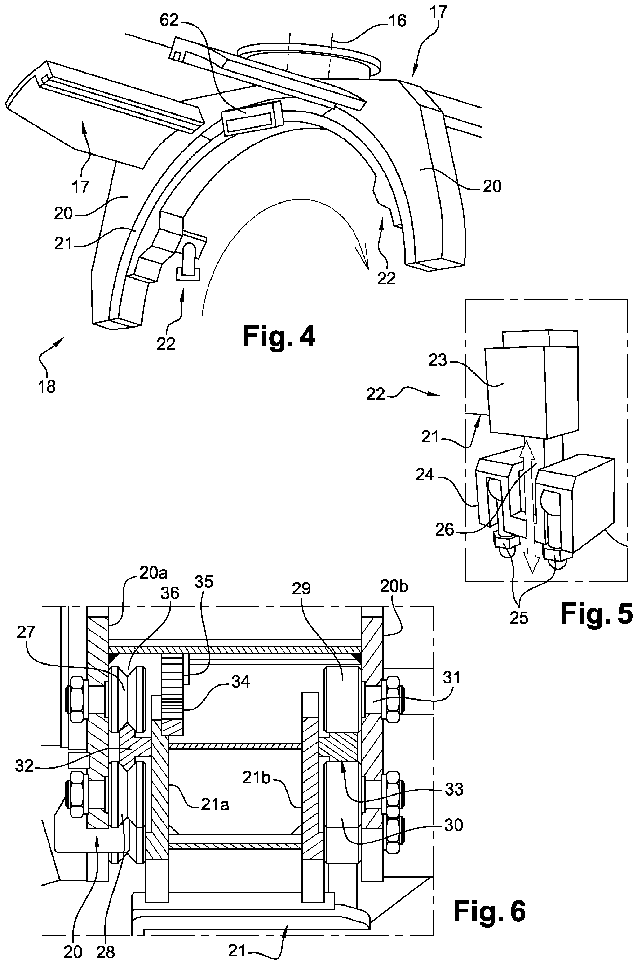

La description du berceau principal 18 est maintenant donnée. Il comporte, comme le montre la figure 4, une première partie 20 s'étendant sous la balancelle 17 et en forme d'arceau, et une seconde partie 21 également en forme d'arceau, inscrite dans la précédente et pouvant pivoter sur elle autour d'un axe parallèle à l'axe X et qui coïncide avec l'axe du moteur M à l'état monté, ce qui permet de modifier son inclinaison de roulis et celle du moteur M, qui lui est suspendu. La seconde partie 21 porte pour cela des dispositifs de fixation 22 du moteur M à ses extrémités, qu'on représente à la figure 5. Ils comprennent une chape supérieure 23 boulonnée à la seconde partie 21, un étrier inférieur 24 porteuse de boulons 25 pour recevoir et fixer des points d'attache non représentés du moteur M, et une tige 26 à laquelle l'étrier inférieur 24 est suspendu et qui est retenue par son extrémité supérieure dans la chape supérieure 23. Grâce à ce dispositif, une descente excessive du moteur M par exemple, pour le déposer sur un chariot après le montage, ne causera pas de dommage, puisque les tiges 26 remonteront dans les chapes supérieures 23 quand le moteur M sera posé, et elles absorberont donc les surcourses des dispositifs de montée-baisse 9.

La figure 6 illustre la façon dont la seconde partie 21 est retenue par la première partie 20. Cette dernière est pourvue de deux paires de rangées courbes de galets, tous en arcs de cercles autour d'un même axe central, comprenant une rangée de galets excentriques 27 rainurés et une rangée de galets 28 concentriques rainurés d'un côté, et une paire de galets 29 excentriques droits et une rangée de galets 30 concentriques droits de l'autre côté. Les galets 27, 28 et 29, 30 sont intercalés entre des flancs 20a ou 20b de la première partie 20 et des flancs 21a ou 21b parallèles de la seconde partie 21. Leurs axes de rotation 31 sont montés sur les flancs 20a et 20b de la première partie 20. La seconde partie 21 est soutenue précisément par un premier rail 32 en arc de cercle, fixé à un des flancs 21a de la seconde partie 21 et retenu entre les galets 27 et 28 rainurés, et un second rail 33, opposé au précédent, fixé à l'autre flanc 21b de la seconde partie 21 et retenu entre les galets 29 et 30 droits. Le montage est réalisé avec une légère précontrainte qui supprime le jeu et garantit donc une grande précision de position de la seconde partie 21 par rapport à la première partie 20 et des mouvements qui leur sont imposés; ainsi qu'on le verra, de tels montages sans jeu d'éléments de transmission seront utilisés en général entre les parties mutuellement mobiles du portique, pour obtenir les mêmes avantages. La position latérale de la seconde partie 21 est garantie par la forme saillante à mi-épaisseur du premier rail 32, qui lui permet d'épouser la section des rainures des galets 27 et 28. Le second rail 33 est plat. Une crémaillère 34 cintrée est par ailleurs fixée au flanc 21a et elle engrène avec un pignon 35 par un moteur 36 fixé à la première partie 20. Grâce à cette disposition, la rotation de la seconde partie 21 sur la première partie 20 devient possible. L'amplitude du mouvement peut être de +/- 70° pour tourner le moteur M monté sur le portique et placer toutes ses parties à une hauteur ou une orientation facilitant les opérations manuelles de l'assemblage.

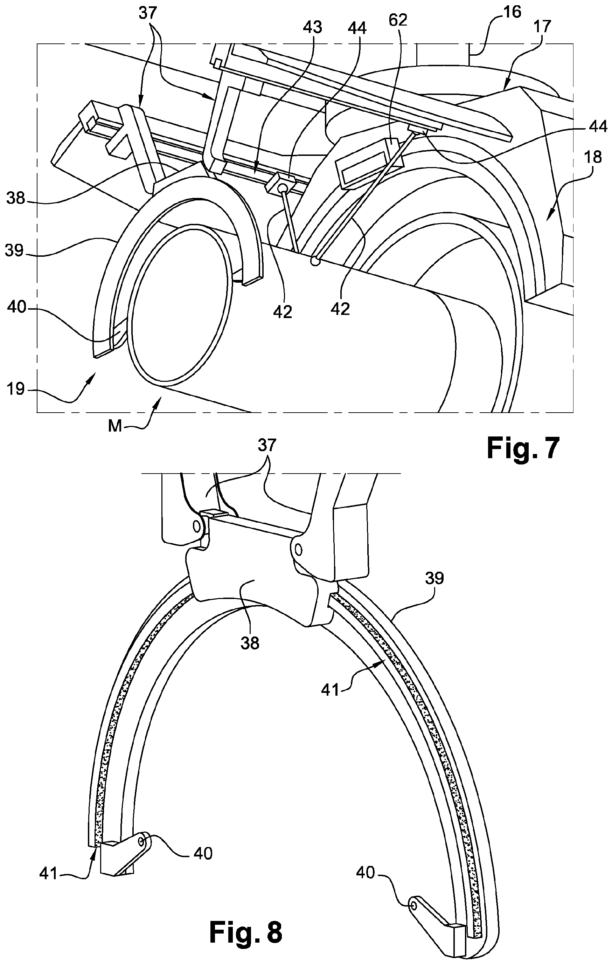

On se reporte aux figures 7 et 8. Le berceau auxiliaire 19 comprend une paire de bras rigides 37 suspendus à la balancelle 17, une première partie 38 suspendue aux bras 37, et une seconde partie 39 glissant sur la première partie 38. Les parties 38 et 39 sont toutes deux en forme d'arceau (la première pouvant cependant être courte), et ont le même mouvement de rotation l'une sur l'autre que les parties 20 et 21 du berceau principal 18. Toutes ces parties 20, 21 et 38, 39 en forme d'arceau sont d'ailleurs coaxiales. Les extrémités de la seconde partie 39 portent des dispositifs de fixation 40 du moteur M, de nature quelconque (on a ici représenté des pattes pourvues d'un trou d'insertion d'un boulon de fixation), et la seconde partie 39 est suspendue à la première partie 38 par un rail 41 qu'elle comporte d'un côté, dont la section peut être la même que celle du premier rail 32 de la figure 6, et qui est retenu par un système courbe de guidage à billes en recirculation, situés dans la première partie 38. Comme toutefois les efforts du poids du moteur M subis par le berceau auxiliaire 19 sont moins importants, le dispositif de guidage est plus simple, et aussi moins étendu en direction angulaire. Aucun moteur d'entraînement n'est présent, la seconde partie 39 suivant les mouvements de rotation imposés par la seconde partie 21 du berceau principal 18.

La balancelle 17 comprend encore des ridoirs 42, qui peuvent eux aussi soutenir le moteur M au cours de son assemblage entre les berceaux 18 et 19. Ils consistent en des tiges tendues de longueurs réglables qui peuvent être déplacées dans la direction longitudinale de la balancelle 17, en faisant coulisser des chariots 44 auxquels ils sont suspendus sur des rails 43.

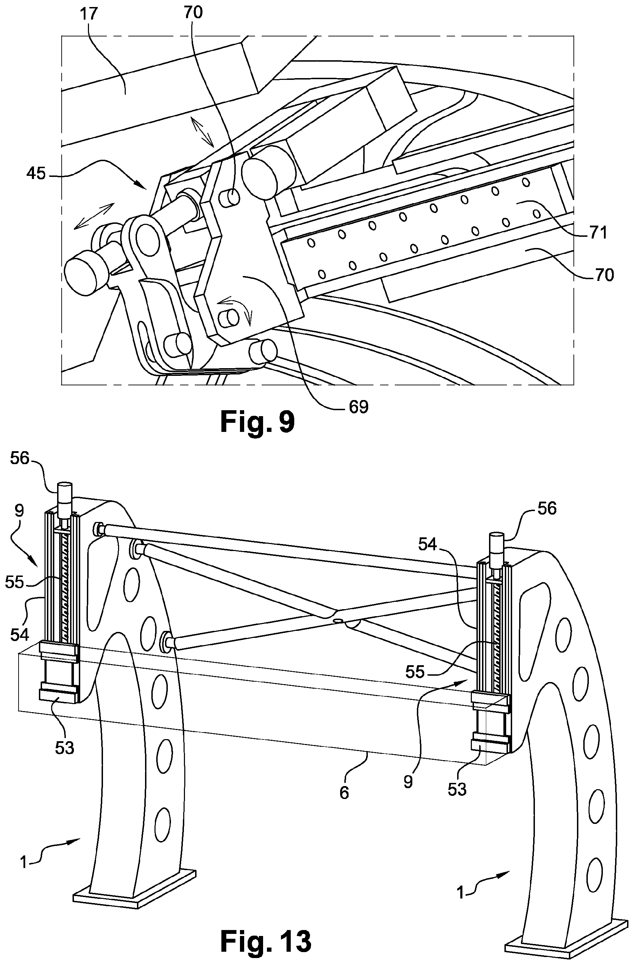

Des vérins électromécaniques 45 sont disposés (figure 9) sous la balancelle 17, de manière à pouvoir s'accrocher au moteur M et à faire varier son tangage en le faisant basculer autour de l'axe transversal Y, par un mouvement de déploiement dans l'axe X. On rétablit ainsi l'assiette du moteur M en rendant horizontal son axe de rotation. On trouve deux de ces vérins électromécaniques 45, de part et d'autre du centre de la balancelle 17 et avec des sens de déploiement parallèles.

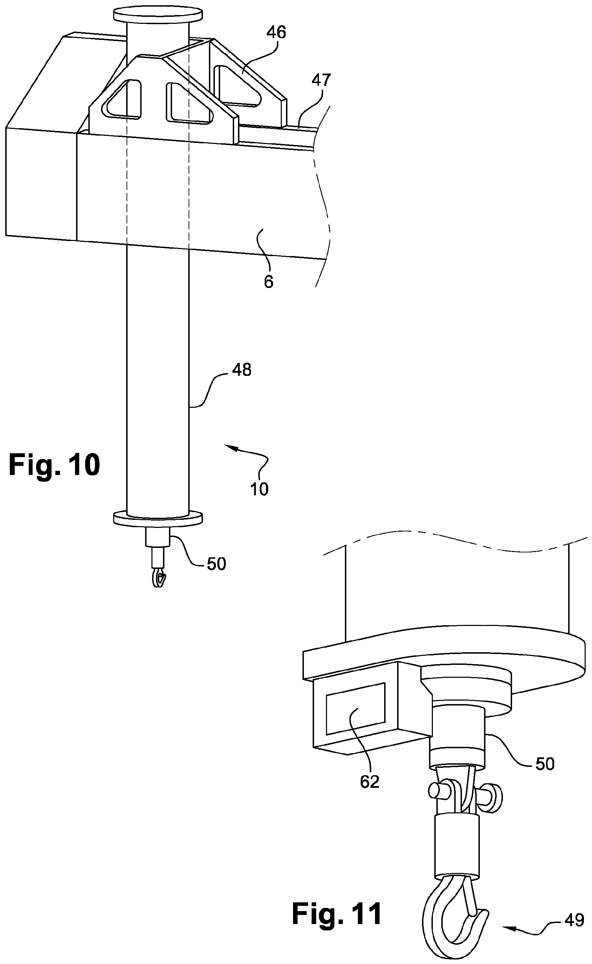

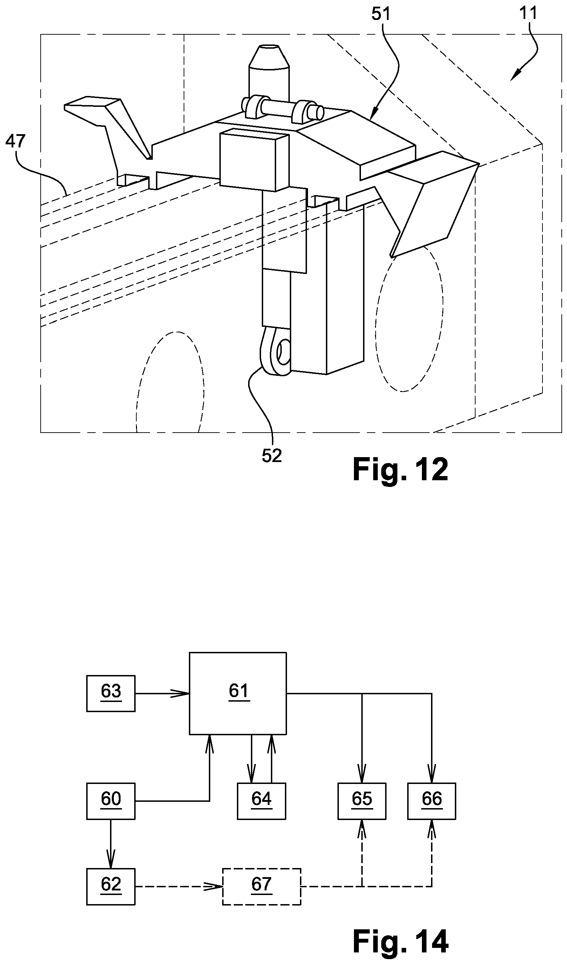

La description générale du palan principal 10 sera maintenant faite en liaison aux figures 10 et 11. Il est monté sur un chariot mobile 46 coulissant sur une piste supérieure 47 de la poutre horizontale 6. Il comprend un tube vertical 48, qui traverse la poutre horizontale 6, se prolonge sous elle et comporte à son extrémité inférieure un crochet de levage 49 suspendu au tube rigide 48 par une pièce intermédiaire comprenant un capteur d'effort triaxial 50. Le palan auxiliaire 11 comprend aussi un chariot mobile 51 sur la même piste supérieure 47 et une chaîne 52 pouvant être déroulée sous le chariot mobile 49 d'une longueur variable (figure 12).

On revient à la figure 2. Si, à l'état habituel du portique, les palans 10 et 11 sont situés de part et d'autre du chariot 12 mobile et de la balancelle 17, cet état n'est pas imposé, puisque le chariot 12 coulisse sur la piste inférieure 13, qui est située nettement au-dessous de la piste supérieure 47. En relevant le tube vertical 48 et en enroulant la chaîne 52, il est possible de faire passer les palans 10 et 11 au-dessus du chariot mobile pour les placer tous les deux de n'importe quel côté de la balancelle 17. Il est aussi possible de les descendre entre les bras rigides 37.

Certains détails de technologie seront maintenant donnés.

La figure 13 montre que la poutre horizontale 6 est suspendue à des chariots 53 mobiles le long de glissières verticales 54, composées chacune d'une paire de rails parallèles, établies sur des faces planes des poteaux 1. Les chariots 53 sont retenus entre les paires de rails, en interposant un système de billes en recirculation classique et non représenté. Le dispositif comprend encore une vis sans fin 55, disposée entre chacune des paires de rails, entraînée par un moteur 56 fixé au sommet du poteau 1 respectif, et dont la rotation élève ou abaisse un écrou fixé au chariot 53. Les guidages à billes des chariots 53 peuvent être précontraints et donc dépourvus de jeux et les moteurs 56 sont synchronisés entre eux par des variateurs maîtres-esclaves à codeur absolu et équipés de freins. Ce dispositif permet donc de commander des mouvements de grande précision de la poutre horizontale 6 à cause de l'absence de jeux, avec une grande sécurité à cause de l'irréversibilité du mouvement entre les vis sans fin et des écrous, et la poutre est maintenue horizontale, grâce à la synchronisation des moteurs 56.

Les mouvements horizontaux de la balancelle 17 dans les deux directions sont assurés au moyen de guidages analogues qui relient la table inférieure 14 à la poutre horizontale 6, d'une part, et à la table supérieure 15, d'autre part, et qui comprennent des glissières sur lesquelles les tables 14 et 15 coulissent avec des billes intermédiaires précontraintes, encore pour assurer des montages sans jeu et une grande précision de position à tout instant. Les mouvements peuvent être assurés soit par des mécanismes à pignon et crémaillère, soit par des vis à billes. L'axe vertical 16 peut être monté sur la table supérieure 15 par un roulement à rouleaux croisés à précharge. Les vérins électromécaniques 45 sont fixés à des chapes 69 par des tourillons 70, et sont déployés par des systèmes à courroie de transmission sans jeu et à vis à bille. Ils sont fixés à la balancelle 17 dans des glissières 70, par des rails de guidage 71 à chariot à billes précontraintes, qui garantissent l'absence de déformation significative sous charge.

Le tube vertical 48 du palan 10 se déplace sur le chariot mobile 46 par un mécanisme analogue à celui des systèmes de montée-baisse 9 de la poutre horizontale 6, décrit à la figure 13. Le moteur de levage, qui est monté sur le chariot mobile 46, entraîne toutefois un écrou en rotation, et le tube vertical 48 porte une vis fixe et les glissières du système de guidage, qui coulissent dans le chariot mobile 46.

La translation des palans 10 et 11 se fait encore au moyen de systèmes de guidage sans jeu, et le mouvement est assuré par des systèmes à pignon et crémaillère.

La conjonction des mécanismes de guidage sans jeu et de systèmes d'entraînement à moteur qu'il est possible de piloter avec une grande précision, grâce à des transmissions également sans jeu et des réducteurs à grand rapport de vitesse, permet de placer les modules du moteur M à des positions bien définies et donc à garantir leur accostage. De plus, le capteur triaxial 50 mesure les poids des charges qui sont successivement levées par le palan 10 et assemblées entre elles pour former peu à peu le moteur M.

La figure 14 représente de façon schématique et synthétique la commande du portique. Les capteurs 60, comprenant le capteur triaxial 50 et des capteurs de position des différents ensembles mécaniques, fournissent ses indications à un système de commande 61; certaines de ces indications, comme les mesures du capteur triaxial 50, apparaissent également sur des afficheurs 62, qui peuvent être disposés en différents endroits du portique, de manière à rester en vue des opérateurs.

Connaissant les poids soulevés et les positions des différents éléments, le système de commande 61 calcule des déformations 64 des différents éléments du portique. Il peut exploiter des mesures de calibrations faites auparavant, par exemple au moyen d'un laser, et mémorisées dans une bibliothèque 63. Il en déduit donc des corrections de trajectoire qu'il faut imposer aux éléments, et notamment le levage des palans 10 et 11, pour commander l'accostage des modules avec une grande précision. Les trajectoires corrigées d'après les déformations étant calculées, le système de commande 61 agit sur les moteurs 65 pour commander les trajectoires d'accostage, et impose des fonctions de vitesse le long des trajectoires au moyen de variateurs de vitesse 66 adjoints aux moteurs. Les opérateurs (symbolisés par le repère 67) gardent toutefois l'initiative des mouvements, et peuvent imposer des corrections manuelles aux trajectoires, en agissant sur les moteurs 65 et des variateurs de vitesse 66, d'après la lecture des afficheurs 62.

Une séquence d'assemblage peut comprendre les étapes suivantes. Un premier module du moteur M, placé sur un chariot mobile, est apporté au-dessous de la balancelle 17. Celle-ci est alors descendue et tournée jusqu'à placer le berceau principal 18 à la bonne hauteur et la bonne orientation. Les mouvements horizontaux de la balancelle 17 placent les dispositifs de fixation 22 devant les moyens correspondant prévus sur le module, et la fixation est alors effectuée. Le module est soulevé et replacé à une orientation adéquate pour recevoir d'autres modules, qui sont cette fois levés par le palan principal 10 et avancés vers la balancelle 17, en déplaçant le palan principal 10 sur la piste supérieure. Le berceau auxiliaire 19 peut être mis en service quand un nombre important de modules a été monté sur le berceau principal 18 et qu'un support supplémentaire devient préférable. On peut procéder soit en fixant un autre module sur le berceau auxiliaire et en déplaçant le berceau auxiliaire pour joindre ce module au moteur M, soit en fixant au berceau auxiliaire le moteur M, déjà soutenu par le berceau principal 18. Quand les modules principaux ont été montés au moyen du palan principal 10 et éventuellement du palan auxiliaire 11, les équipements auxiliaires du moteur M (pompes, moteurs électriques, tuyaux, etc.) peuvent être placés manuellement. On est alors libre de déplacer le moteur M sur le portique pour le mettre à la position, la hauteur et l'orientation les plus commodes pour chaque opération ; la possibilité de le faire tourner autour de son axe permet notamment de placer toutes ses génératrices à une hauteur convenable pour les assemblages.

## Revendications

1. Portique d'assemblage d'un moteur (M), le portique comprenant : une poutre horizontale (6) ; deux poteaux (1) ; deux moyens de guidage et de montée-baisse (9) reliant chacun une extrémité de la poutre (6) à un des poteaux (1) ; un chariot (12) posé sur la poutre et mobile le long de la poutre ; une balancelle (17) suspendue au chariot; un moyen de rotation de la balancelle autour d'un axe vertical (16) reliant la balancelle au chariot, la balancelle comprenant un berceau (18) de fixation du moteur, **caractérisé en ce que** le berceau (18) comprend une première partie (20) reliée à l'axe vertical (16), une seconde partie (21) porteuse d'un dispositif de fixation (22) du moteur (M), et un moyen de déplacement coulissant de la seconde partie le long de la première partie, la seconde partie étant soutenue par la première partie, la première partie et la seconde partie étant en forme d'arceaux.

2. Portique d'assemblage selon la revendication 1, **caractérisé en ce que** la balancelle comprend un berceau auxiliaire (19) qui comprend une première partie (38) suspendue à la balancelle, une seconde partie (41) porteuse de moyens de fixation (40) du moteur (M), la seconde partie étant soutenue par la première partie, la première partie et la seconde partie étant en forme d'arceaux, la seconde partie coulissant librement le long de la première partie, les arceaux du berceau et du berceau auxiliaire étant coaxiaux.

3. Portique d'assemblage selon l'une quelconque des revendications 1 ou 2, **caractérisé en ce qu'**il comprend au moins un palan (10) de levage posé sur la poutre et mobile le long de la poutre.

4. Portique d'assemblage selon la revendication 3, **caractérisé en ce que** le palan (10) est porteur d'un capteur (50) de charge levée.

5. Portique d'assemblage selon la revendication 4, **caractérisé en ce que** le capteur (50) du palan est un capteur triaxial de charge levée.

6. Portique d'assemblage selon l'une quelconque des revendications 3 à 5, **caractérisé en ce que** le palan (10) est mobile sur une piste (47) de la poutre qui est superposée à une autre piste (13) de la poutre sur laquelle le chariot (12) est mobile, et le palan peut être levé en s'étendant complètement à un niveau supérieur à un sommet du chariot mobile et de la balancelle.

7. Portique d'assemblage selon l'une quelconque des revendications 1 à 6, **caractérisé en ce que** le chariot comporte une première partie (14) reliée à la poutre (6) et une seconde partie (15) reliée à l'axe vertical (16), et des moyens de déplacement de la seconde partie par rapport à la première dans une direction horizontale perpendiculaire à la poutre.

8. Portique d'assemblage selon l'une quelconque des revendications 1 à 7, **caractérisé en ce que** le moteur (M) est fixé au berceau (18) par des dispositifs de fixation (22) comprenant un débattement vertical libre.

9. Portique d'assemblage selon l'une quelconque des revendications 1 à 8, **caractérisé en ce qu'**il comprend des poutres de jonction (7) reliant les poteaux entre eux, les poutres de jonction comprenant des poutres obliques (8) ayant des directions croisées.

10. Portique d'assemblage selon l'une quelconque des revendications 1 à 9, **caractérisé en ce que** les poteaux comprenant une partie montante (2), inclinée en s'éloignant de la poutre horizontale en sens montant, et une partie de sommet (5) courbe en voûte, reliant la partie montante à la poutre horizontale.

11. Portique d'assemblage selon l'une quelconque des revendications 1 ou 10, **caractérisé en ce qu'**il comprend un dispositif de commande (61) de déplacement des constituants du portique, le dispositif comprenant des moyens numériques de correction automatique des déplacements d'après des poids soutenus par le berceau (18).

12. Portique d'assemblage d'une quelconque des revendications 3 à 6, **caractérisé en ce que** le dispositif comprend des moyens numériques de correction automatique des déplacements d'après des poids levés par le palan (10).

13. Portique d'assemblage selon l'une quelconque des revendications 1 à 12, **caractérisé en ce qu'**il comprend un afficheur (62) de poids levés ou soutenus.

14. Portique d'assemblage selon l'une quelconque des revendications 1 à 13, **caractérisé en ce que** les moyens de déplacement comprennent, entre deux parties qu'ils relient, des moyens de guidage à éléments roulants intermédiaires montés sans jeu et précontraints.

## Patentansprüche

1. Tragrahmen für den Zusammenbau eines Motors (M), welcher umfasst: einen waagrechten Träger (6); zwei Ständer (1); zwei Führungs- und Hebe-/Senkmittel (9), die jeweils ein Ende des Trägers (6) mit einem der Ständer (1) verbinden; einen Wagen (12), der auf dem Träger sitzt und entlang des Trägers bewegt werden kann; ein Gehänge (17), das an dem Wagen aufgehängt ist; ein Mittel zum Drehen des Gehänges um eine senkrechte Achse (16), die das Gehänge mit dem Wagen verbindet, wobei das Gehänge eine Wiege (18) zur Befestigung des Motors aufweist,
**dadurch gekennzeichnet,**
**dass** die Wiege (18) einen ersten Teil (20) umfasst, der mit der senkrechten Achse (16) verbunden ist, einen zweiten Teil (21), der eine Befestigungsvorrichtung (22) für den Motor (M) trägt, sowie ein Mittel zum gleitenden Verschieben des zweiten Teils entlang des ersten Teils, wobei der zweite Teil von dem ersten Teil gehalten wird, wobei der erste Teil und der zweite Teil bogenförmig ausgeführt sind.

2. Tragrahmen für den Zusammenbau nach Anspruch 1,
**dadurch gekennzeichnet,**
**dass** das Gehänge eine Zweitwiege (19) aufweist, die einen ersten Teil (38) umfasst, der an dem Gehänge aufgehängt ist, einen zweiten Teil (41), der Befestigungsmittel (40) für den Motor (M) trägt, wobei der zweite Teil von dem ersten Teil gehalten wird, wobei der erste Teil und der zweite Teil bogenförmig ausgeführt sind, wobei der zweite Teil frei an dem ersten Teil entlang gleitet, wobei die Bögen der Wiege und der Zweitwiege koaxial verlaufen.

3. Tragrahmen für den Zusammenbau nach einem der Ansprüche 1 oder 2,
**dadurch gekennzeichnet,**
**dass** er mindestens einen Hebezug (10) aufweist, der an dem Träger angeordnet ist und entlang des Trägers bewegt werden kann.

4. Tragrahmen für den Zusammenbau nach Anspruch 3,
**dadurch gekennzeichnet,**
**dass** der Hebezug (10) einen Hebelast-Messer (50) trägt.

5. Tragrahmen für den Zusammenbau nach Anspruch 4,
**dadurch gekennzeichnet,**
**dass** der Hebelast-Messer (50) des Hebezugs ein dreiachsiger Hebelast-Messer ist.

6. Tragrahmen für den Zusammenbau nach einem der Ansprüche 3 bis 5,
**dadurch gekennzeichnet,**
**dass** der Hebezug (10) auf einer Bahn (47) des Trägers bewegt werden kann, die sich mit einer anderen Bahn (13) des Trägers, auf der der Wagen (12) bewegt werden kann, überlagert, und der Hebezug angehoben werden kann, wobei er sich gänzlich in einer Höhe über einer Spitze des bewegbaren Wagens und des Gehänges erstreckt.

7. Tragrahmen für den Zusammenbau nach einem der Ansprüche 1 bis 6,
**dadurch gekennzeichnet,**
**dass** der Wagen einen ersten Teil (14), der mit dem Träger (6) verbunden ist, und einen zweiten Teil (15), der mit der senkrechten Achse (16) verbunden ist, sowie Mittel zum Verschieben des zweiten Teils gegenüber dem ersten in einer waagrechten Richtung im rechten Winkel zu dem Träger aufweist.

8. Tragrahmen für den Zusammenbau nach einem der Ansprüche 1 bis 7,
**dadurch gekennzeichnet,**
**dass** der Motor (M) an der Wiege (18) durch Befestigungsmittel (22) mit freiem vertikalen Ausschlag befestigt ist.

9. Tragrahmen für den Zusammenbau nach einem der Ansprüche 1 bis 8,
**dadurch gekennzeichnet,**
**dass** er Verbindungsstangen (7) aufweist, die die Ständer miteinander verbinden, wobei die Verbindungsstangen schräg verlaufende Stangen (8) mit sich kreuzenden Richtungen enthalten.

10. Tragrahmen für den Zusammenbau nach einem der Ansprüche 1 bis 9,
**dadurch gekennzeichnet,**
**dass** die Ständer einen aufwärts führenden Teil (2) aufweisen, der geneigt ist, so dass er sich von dem waagrechten Träger in aufsteigender Richtung entfernt, und einen gewölbeförmig gebogenen Kopfteil (5) aufweisen, der den aufwärts führenden Teil mit dem waagrechten Träger verbindet.

11. Tragrahmen für den Zusammenbau nach einem der Ansprüche 1 oder 10,
**dadurch gekennzeichnet,**
**dass** er eine Steuervorrichtung (61) zum Verschieben der Bestandteile des Tragrahmens aufweist, wobei die Vorrichtung digitale Mittel zur automatischen Korrektur der Verschiebungen je nach von der Wiege (18) getragenen Gewichten enthält.

12. Tragrahmen für den Zusammenbau nach einem der Ansprüche 3 bis 6,
**dadurch gekennzeichnet,**
**dass** die Vorrichtung digitale Mittel zur automatischen Korrektur der Verschiebungen je nach von dem gehobenen Gewichten enthält.

13. Tragrahmen für den Zusammenbau nach einem der Ansprüche 1 bis 12,
**dadurch gekennzeichnet,**
**dass** er eine Anzeigeeinrichtung (62) für gehobene oder gehaltene Gewichte aufweist.

14. Tragrahmen für den Zusammenbau nach einem der Ansprüche 1 bis 13,
**dadurch gekennzeichnet,**
**dass** die Verschiebemittel zwischen zwei Teilen, die sie miteinander verbinden, Führungsmittel mit ohne Spiel und Vorspannungen zwischengelagerten Rollelementen aufweisen.

## Claims

1. An assembly gate for assembling an engine (M), the gate comprising: a horizontal beam (6); two posts (1); two guide and rise-lower means (9) each connecting one end of the beam (6) to one of the posts (1); a carriage (12) laid on the beam and movable along the beam; a swing tray (17) suspended to the carriage; a means for rotating the swing tray about a vertical axis (16) connecting the swing tray to the carriage, the swing tray comprising a cradle (18) for fastening the engine, **characterised in that** the cradle (18) comprises a first part (20) connected to the vertical axis (16), a second part (21) carrying a device (22) for fastening the engine (M), and a means for slidingly moving the second part along the first part, the second part being supported by the first part, the first part and the second part being arc-shaped.

2. The assembly gate according to claim 1, **characterised in that** the swing tray comprises an auxiliary cradle (19) which comprises a first part (38) suspended to the swing tray, a second part (41) carrying the means (40) for fastening the engine (M), the second part being supported by the first part, the first part and the second part being arc-shaped, the second part freely sliding along the first part, the arcs of the cradle and the auxiliary cradle being coaxial.

3. The assembly gate according to any of claims 1 and 2, **characterised in that** it comprises at least one lift tackle (10) laid on the beam and movable along the beam.

4. The assembly gate according to claim 3, **characterised in that** the tackle (10) is carrying a lifted load sensor (50).

5. The assembly gate according to claim 4, **characterised in that** the tackle sensor (50) is a triaxial lifted load sensor.

6. The assembly gate according to any of claims 3 to 5, **characterised in that** the tackle (10) is movable on a track (47) of the beam which is superimposed with another track (13) of the beam on which the carriage (12) is movable, and the tackle can be lifted by extending fully to an upper level at a top of the movable carriage and of the swing tray.

7. The assembly gate according to any of claims 1 to 6, **characterised in that** the carriage includes a first part (14) connected to the beam (6) and a second part (15) connected to the vertical axis (16), and means for moving the second part with respect to the first one in a horizontal direction perpendicular to the beam.

8. The assembly gate according to any of claims 1 to 7, **characterised in that** the engine (M) is fastened to the cradle (18) by fastening devices (22) comprising a free vertical clearance.

9. The assembly gate according to any of claims 1 to 8, **characterised in that** it comprises junction beams (7) connecting the posts to each other, the junction beams comprising oblique beams (8) having crossed directions.

10. The assembly gate according to any of claims 1 to 9, **characterised in that** the posts comprise a rising part (2), tilted away from the horizontal beam in a rising direction, and a vault curved top part (5), connecting the rising part to the horizontal beam.

11. The assembly gate according to any of claims 1 and 10, **characterised in that** it comprises a control device (61) for controlling the movement of the stand components, the device comprising digital means for automatically correcting the movements based on weights supported by the cradle (18).

12. The assembly gate according to any of claims 3 to 6, **characterised in that** the device comprises digital means for automatically correcting the movements based on the weights lifted by the tackle (10).

13. The assembly gate according to any of claims 1 to 12, **characterised in that** it comprises a lifted or supported weight display (62).

14. The assembly gate according to any of claims 1 to 13, **characterised in that** the movement means comprise, between two parts they connect, guide means with prestressed intermediate rolling elements mounted without play.
